# EUROPÄISCHE PATENTSCHRIFT

(11) **EP 2 011 633 B1**
(45) Veröffentlichungstag und Bekanntmachung des Hinweises auf die Patenterteilung: **12.10.2016**
(21) Anmeldenummer: 08159694.2
(22) Anmeldetag: 04.07.2008
(51) Int. Cl.: B29C 70/20, B29C 70/46, B29C 43/56, B29C 70/16, F16F 1/368

(54) **Verfahren zur Herstellung einer Blattfeder aus einem Faserverbundwerkstoff mit einem Thermoplast sowie derartig hergestellte Blattfeder**
Method for manufacturing a leafspring from a fibrous compound material with a thermoplast and a leafspring manufactured according to this method
Procédé de fabrication d'un ressort à lame à partir d'une matière composite fibreuse dotée d'un thermoplastique et ressort à lame ainsi fabriqué

(30) Priorität: 04.07.2007 DE 102007031104
(43) Veröffentlichungstag der Anmeldung: 07.01.2009
(73) Patentinhaber: IFC Composite GmbH, 39340 Haldensleben (DE)
(72) Erfinder: Voigt, Matthias, 39343 Nordgermersleben (DE)
(74) Vertreter: Santarelli

(56) Entgegenhaltungen:
- EP-A2- 0 033 244
- DE-A1- 10 260 060
- FR-A1- 2 047 935
- JP-A- 63 225 738
- US-A- 5 667 206
- US-A- 6 114 000

## Beschreibung

Die Erfindung betrifft ein Verfahren zur Herstellung einer Blattfeder aus einem Faserverbundwerkstoff mit einem Thermoplast gemäß Merkmalen des Anspruchs 1 sowie eine derart hergestellte Blattfeder gemäß dem Oberbegriff des Anspruchs 7.

Aus der EP 0 084 101 A2 ist es bekannt, dass Blattfedern aus einem Faserverbundwerkstoff herstellbar sind. Solche Blattfedern haben gegenüber herkömmlichen Blattfedern aus metallischen Werkstoffen den Vorteil eines geringeren Gewichts und einer längeren Haltbarkeit. Durch die Schichtendicken des Laminats sowie durch die jeweilige Ausrichtung der Fasern in einer Kunststoffmatrix kann die Federcharakteristik in weiten Grenzen beeinflusst werden.

Im Allgemeinen werden Blattfedern aus faserverstärkten Werkstoffen aus so genannten Nasslaminaten bzw. Prepregs hergestellt, die mit der gewünschten Faserausrichtung übereinander geschichtet sowie anschließend verpresst und ausgehärtet werden. Unter dem Begriff Prepreg wird bekanntermaßen ein Halbzeug bzw. ein Vorprodukt zur Herstellung von Gegenständen aus einem Faserverbundmaterial verstanden. Ein Prepreg besteht konventionell aus Fasern und einer ungehärteten duroplastischen Kunststoffmatrix. Dabei können die Fasern unidirektional ausgerichtet sein oder als Gewebe oder Gelege vorliegen. Eine duroplastische Kunststoffmatrix besteht üblicherweise aus einer Mischung aus einem Kunstharz, einem Härter sowie einem Beschleuniger. Als Kunstharze kommen beispielsweise Harze auf der Basis von Epoxydharz oder Vinylesterharz zur Anwendung.

Zur Herstellung von Prepregs mit einer duroplastischen Kunststoffmatrix werden die Fasern beispielsweise auf einem Träger abgelegt und anschließend mit dem Kunstharz benetzt. Auch eine Imprägnierung der Fasern mit dem noch flüssigen Kunstharz vor deren Ablegen auf den Träger ist bekannt. Durch Kühlen des Prepregs wird das chemische Reagieren des Härters und des Beschleunigers mit dem Kunstharz so lange verhindert, bis das Prepreg zur Herstellung eines Endproduktes verwendet werden soll. So werden beispielsweise zur Herstellung einer Faserverbund-Blattfeder mehrere Prepreg-Lagen übereinander geschichtet und anschließend zugeschnitten. Durch ein dann folgendes Erwärmen dieses Werkstücks über die Reaktionstemperatur des Härters hinaus beginnt der Aushärtevorgang, der schließlich zu dem gewünschten Endprodukt führt. Sofern diese Erwärmung in einer Presse sowie in einem Autoklav bei atmosphärischem Unterdruck durchgeführt wird, lassen sich luftblasenfreie Endprodukte mit sehr hohem Faseranteil und vergleichsweise geringem Kunststoffmatrixanteil herstellen.

Um Prepregs unter Nutzung einer duroplastischen Kunststoffmatrix in einem kontinuierlichen Herstellungsprozess herstellen zu können, muss einer diesbezüglichen Fertigungsvorrichtung beständig ein Strang aus Fasern zugeführt werden. Dabei ist darauf zu achten, dass die Fasern in der gewünschten räumlichen Orientierung verbleiben. Die Faserverteilung soll dabei also üblicherweise homogen sein. Zudem soll bei der Zuführung und Weiterverarbeitung des Faserstranges ein möglichst geringer Faserbruch eintreten. Außerdem soll der Faserstrang mit der genannten duroplastischen Kunststoffmatrix, also der Mischung von zumindest Kunstharz, Härter und Beschleuniger, benetzt werden. Dabei ist es wichtig, dass die Verteilung der duroplastischen Kunststoffmatrix gleichmäßig erfolgt bzw. alle Fasern des Faserstranges von der Kunststoffmatrix imprägniert werden. Zudem soll nicht zuviel der Kunststoffmatrix auf den Faserstrang gelangen, da dieses die Herstellkosten erhöhend ein seitliches Ablaufen der überschüssigen Flüssigkeit in unerwünscht großem Umfang zur Folge hätte.

Eine Blattfeder aus einem Faserverbundwerkstoff sowie eine Verfahren zur Herstellung derselben ist beispielsweise aus der DE 10 2004 010 768 A1 bekannt. Von besonderer Bedeutung bei dieser Faserverbund-Blattfeder ist, dass die axialen Enden eines zentralen Längsabschnitts hinsichtlich der Blattfederbreite sich verjüngend ausgebildet sind, wobei die axial ausgerichteten Fasern des Faserverbundwerkstoffes ungekürzt bis zur Abschlusskante der Blattfeder geführt sind. In dieser Druckschrift ist beschrieben, dass die Herstellung der Blattfeder mit einer duroplastischen Kunststoffmatrix erfolgt, die bei der Einwirkung von Wärme aushärtet.

Zudem ist es bekannt, Blattfedern aus einem Faserverbundwerkstoff herzustellen, der einen thermoplastischen Werkstoff nutzt. So beschreibt die DE 102 60 060 A1 eine Blattfeder für ein Kraftfahrzeug, die aus verschiedenen Materialien hergestellt sein kann, zu denen Verbundwerkstoffe, Metalle, Metall-Metall-Gussverbunde und Kunststoff-Metall-Hybrid-Werkstoffe gehören können. Wenngleich in dieser Druckschrift erwähnt wird, dass die Blattfeder aus einem thermoplastischen Verbundwerkstoff hergestellt sein kann, so sind über deren inneren Aufbau oder über deren Herstellung keine Angaben gemacht.

Die EP 1 982 071 A2 offenbart ein Verfahren zur Herstellung eines Prepregs mit einem schichtartigen Aufbau, bei dem Schichten aus Fasern, Streifen aus einem Adhesive und linienförmig angeordnetes Harz wechselweise zueinander angeordnet sind.

Zusätzlich ist aus der EP 0 033 244 A1 ein Verfahren zur Herstellung eines faserverstärkten Kunststoffmaterials bekannt, bei dem beispielsweise Glasfasern und Fasern aus einem thermoplastischem Werkstoff von Spulen abgerollt, in einer Vorrichtung zusammengeführt, dort erhitzt und auf einer Ablage zum Abbinden unter Abkühlung abgelegt werden.

Bei dem Verfahren gemäß der US 5 667 206 A werden Glas- und PET-Fasern in einem Harz imprägniert, zu rovings gebündelt, in einer drehbaren Form aufgewickelt und dort und zu einer Blattfeder ausgehärtet.

Die DE 40 07 346 A1 beschreibt eine Blattfeder, bestehend aus einer Kunststoffmatrix und in Längsrichtung ausgerichtete Verstärkungsfasern, mit mindestens zwei im wesentlichen parallel zur Oberfläche der Feder verlaufenden Schichten, wobei in den verschiedenen Schichten die Kunststoffmatrix aus verschiedenartigen, jedoch miteinander verträglichen Kunststoffen gebildet ist. Die Herstellung von Prepregs für die Herstellung einer Faserverbundblattfeder erfolgt ebenfalls durch Tränken von Faserlagen mit den Kunststoffen in Form einer Schmelze sowie anschließendem Verformen der Prepregs durch Pressen.

Schließlich ist aus der JP 63 225 738 A eine Blattfeder für ein Fahrzeug bekannt, die aus einem mehrlagigen Faserverbundwerkstoff hergestellt ist. Bestimmte Werkstofflagen dieser Blattfeder dienen zur Vibrationsdämpfung und bestehen aus einem viscoelastischen Material, beispielsweise einem Thermoplast, wie beispielsweise Polyethylen, verschiedene Schäume, Elastomere und Gummi.

Erwähnenswert ist in diesem Zusammenhang, dass thermoplastische Kunststoffe einige Werkstoffeigenschaften haben, die deren Nutzung bei der Herstellung von Faserverbundblattfedern als vorteilhaft erscheinen lassen. Da thermoplastische Kunststoffe bei deren Verarbeitung jedoch mit dem in der Umgebungsluft befindlichen Sauerstoff reagieren und sich daher nachteilige Oxidationsschichten bilden können, wurde von deren Verarbeitung zur Herstellung von solchen Blattfedern bisher abgesehen.

Zur Weiterentwicklung des Standes der Technik liegt der Erfindung die Aufgabe zugrunde, ein Verfahren zur Herstellung von Blattfedern aus einem Faserverbundwerkstoff unter Nutzung eines thermoplastischen Kunststoffes zu beschreiben, mit dem die eingangs beschriebenen technischen Probleme gemeistert werden können. So soll insbesondere erreicht werden, dass die Fasern in der Blattfeder in einer gewünschten Ausrichtung vorliegen, und dass das Thermoplast in der Blattfeder ohne großen Materialüberschuss sowie in ausreichender Menge zu allen Fasern gelangt. Eine weitere Aufgabe besteht darin, eine derart hergestellte Faserverbund-Blattfeder vorzustellen.

Die Lösung dieser Aufgaben ergibt sich aus den Merkmalen der unabhängigen Patentansprüche. Vorteilhafte Weiterbildungen und Ausgestaltungen der Erfindung sind den zugeordneten Unteransprüchen entnehmbar.

Der Erfindung liegt die Erkenntnis zugrunde, dass eine Blattfeder aus einem Faserverbundwerkstoff dann den im Automobilbau herrschenden sehr hohen Qualitätsanforderungen gerecht werden kann und zudem vergleichsweise kostengünstig herstellbar ist, wenn deren Faserverbundwerkstoff unter Verwendung von zumindest einen thermoplastischen Werkstoffs hergestellt wird.

Demnach betrifft die Erfindung ein Verfahren zur Herstellung einer Blattfeder aus einem Faserverbundwerkstoff, wobei der Faserverbundwerkstoff aus einem Thermoplast und unidirektional ausgerichteten Fasern besteht, und bei dem das Thermoplast in Form von Folien verwendet wird, mit den folgenden Verfahrensschritten:
a) Herstellen eines Faser-Thermoplast-Stranges durch wechselweises Anordnen von Fasern und Thermoplastfolien, wobei das in einer Längeneinheit des Faser-Thermoplast-Stranges befindliche Volumen des Thermoplasts größer ist als das Volumen aller Zwischenräume zwischen den Fasern, und bei dem das in einer Längeneinheit des Faser-Thermoplast-Stranges befindliche Volumen des Thermoplasts zusätzlich ausreicht, um alle Außenoberflächen der in der Roh-Blattfeder außenseitig angeordneten Fasern vollständig abzudecken,
b) Einbringen des Faser-Thermoplast-Stranges oder einer Mehrzahl von Faser-Thermoplast-Strängen vorbestimmter Länge in eine Formpresse,
c) Ausüben einer vorbestimmten Kraft sowie einer vorbestimmten ersten Temperatur auf den zumindest einen Faser-Thermoplast-Strang in der Formpresse derart, dass das Thermoplast schmilzt und dieses alle Zwischenräume zwischen den Fasern ausfüllt sowie die Fasern an der außenseitige Oberfläche der so hergestellten Roh-Blattfeder vollständig abdeckt,
d) Ausformen der Roh-Blattfeder aus der Formpresse und Abkühlen derselben auf eine zweite Temperatur, und
e) Endbearbeitung der Roh-Blattfeder.

Dieses Verfahren besticht in seiner unerwarteten Einfachheit, wobei die wechselweise Anordnung von Fasern und Thermoplast-Material in dem noch nicht abgebundenen Faser-Thermoplast-Strang es vorteilhaft ermöglicht, dass das Thermoplast-Material nach dessen Erwärmen über seine Schmelztemperatur zu allen Fasern vordringen und diese benetzen kann. Dieses Verfahren eignet sich sehr gut für eine kontinuierliche Herstellung des Faser-Thermoplast-Stranges bzw. der Blattfeder, wenngleich auch eine diskontinuierliche Herstellung durch zielgerichtetes, bevorzugt wechselweises Ablegen von Fasern und von Thermoplast-Material möglich ist. Favorisiert wird das Thermoplast-Material zur Bildung des noch nicht abgebundenen Faser-Thermoplast-Stranges bzw. der Blattfeder bei beiden Varianten in fester Form mit den Fasern geschichtet angeordnet, wobei eine wechselweise horizontale und vertikale Schichtung von Vorteil jedoch nicht zwingend notwendig ist.

In weiterer Ausgestaltung des Verfahrens gemäß der Erfindung ist vorgesehen, dass die Fasern und die Thermoplastfolien zur Bildung eines Faser-Thermoplast-Stranges kontinuierlich aus zugeordneten Speichern entnommen, anschließend wechselweise nebeneinander und/oder übereinander abgelegt sowie schließlich in Stücke solcher Länge abgeschnitten werden, die der Länge einer herzustellenden Roh-Blattfeder im Wesentlichen entspricht. Bei Beaufschlagung mit einem Schutzgas können die Thermoplast-Folien auch im erhitzten Zustand den Fasern zugeführt werden.

Als Thermoplast wird beispielsweise ein Polypropylen oder Styrol-Acrylnitril-Copolymer (SAN) verwendet, jedoch ist auch die Nutzung anderer geeigneter thermoplastischer Werkstoffe möglich. Als Fasern zur Herstellung der Faserverbund-Blattfeder werden Glasfasern, Aramidfasern, Kohlenstofffasern oder metallische Fasern bevorzugt.

Um eine Oxidation des erhitzten Thermoplasts an der Umgebungsluft zu verhindern, kann vorgesehen sein, dass das Herstellverfahren zur Bildung der Faser-Thermoplast-Stränge bzw. zur Herstellung der kompletten Roh-Blattfeder zumindest in der Formpresse unter Einwirkung von einem Schutzgas durchgeführt wird. Dabei kann die komplette Fertigungseinrichtung samt der Formpresse sowie ein nachgeordneter Abkühlabschnitt in einem gesonderten Schutzgasraum angeordnet sein und folglich dort mit diesem Schutzgas beaufschlagt werden, und/oder das Schutzgas wird unmittelbar nach dem Ausformen eines Faser-Thermoplast-Stranges bzw. einer Roh-Blattfeder während einer Abkühlphase auf deren Oberflächen zur Verhinderung einer Oxidation geleitet. Als Schutzgas wird Stickstoff, Argon, Helium oder ein Gemisch von zumindest zweien dieser Gase verwendet.

Eine nach diesem Verfahren hergestellte Blattfeder besteht demnach aus einem Faserverbundwerkstoff aus einem Thermoplast und unidirektional ausgerichteten Fasern, deren Oberfläche, und bei einem Aufbau aus mehreren Lagen von Faser-Thermoplast-Strängen deren Zwischenschichten, ein erstarrtes, nicht oxidiertes Thermoplast aufweist.

Zur Verdeutlichung der Erfindung ist der Beschreibung eine Zeichnung beigefügt, in der mehrere Ausführungsbeispiele der Erfindung dargestellt sind. In dieser zeigt
- Fig. 1: mehrere Speicher, aus denen Fasern sowie Thermoplastmaterial in lang gestreckter Form entnommen und zur Bildung eines Faser-Thermoplast-Stranges mit geschichtetem Aufbau zusammengeführt werden,
- Fig. 2: einen schematischen Querschnitt durch einen Faser-Thermoplast-Strang gemäß Fig. 1 mit Thermoplast-Folien,
- Fig. 3: einen schutzgasgefüllten Raum, in dem eine Formpresse angeordnet ist, mit der aus zwei übereinander angeordneten Faser-Thermoplast-Strängen unter Druck und Wärme eine Roh-Blattfeder hergestellt wird,
- Fig. 4: eine schematische Darstellung einer aus der Formpresse entnommenen Roh-Blattfeder während einer Abkühlphase, und
- Fig. 5: einen schematischen Querschnitt durch eine ausgehärtete Roh-Blattfeder.

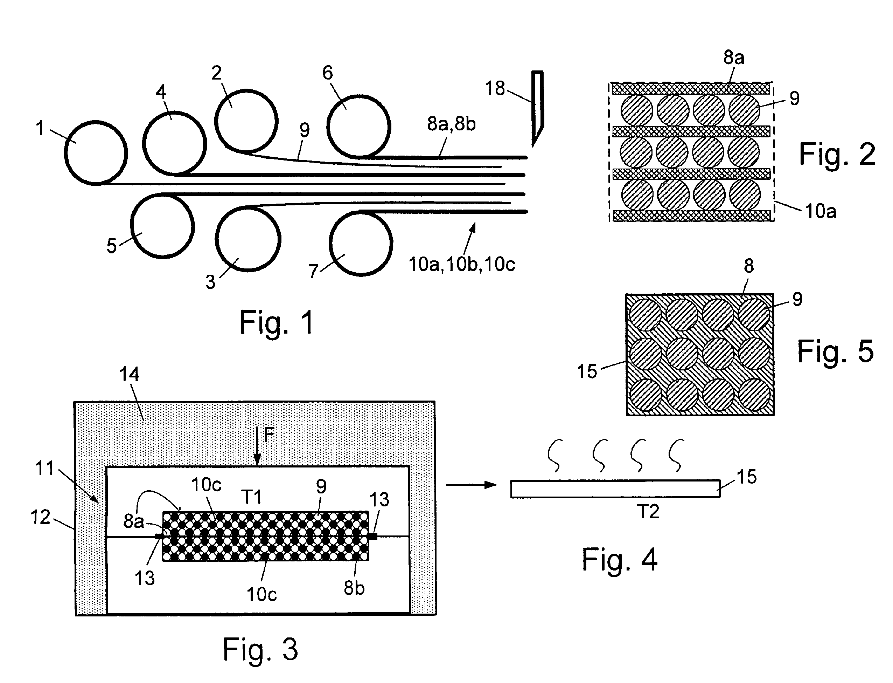

Wie Fig. 1 zeigt, werden gemäß einem Ausführungsbeispiel der Erfindung Fasern 9 in Form von unidirektionalen Glasfasern sowie ein Thermoplast in Form von Thermoplast-Folien 8a von trommelförmigen Faserspeichern 1,2,3 bzw. trommelförmigen Thermoplastspeichern 4, 5, 6, 7 abgerollt und zu einem Faser-Thermoplast-Strang 10a, 10b, 10c durch wechselweises Anordnen derselben vereint. Dieser Herstellvorgang kann auch in einer Schutzgasatmosphäre erfolgen.

Wie die Querschnittsdarstellung gemäß Fig. 2 verdeutlicht, werden dabei einzelne Fasern 9 zu einer Schicht weitgehend horizontal nebeneinander angeordnet und sowohl auf der Oberseite als auch auf der Unterseite dieser Schicht von jeweils einer Thermoplast-Folie 8a abgedeckt. In ihrer Gesamtheit bilden diese Glasfasern 9 und die Thermoplast-Folien 8a den Faser-Thermoplast-Strang 10a, der mittels einer Schneidevorrichtung 18 in Längen zerschnitten wird, die im Wesentlichen der Länge der herzustellenden Roh-Blattfeder 15 entspricht.

Eine Roh-Blattfeder 15 kann aus einem einzigen Faser-Thermoplast-Strang 10a, 10b, 10c oder aber aus einer Mehrzahl von Faser-Thermoplast-Strängen 10a, 10b, 10c bestehen, die zur Ausbildung der gewünschten Dicke der Roh-Blattfeder 15 übereinander geschichtet angeordnet sind.

In Fig. 3 ist eine zweite Variante eines Faser-Thermoplast-Stranges 10c erkennbar, von denen zwei Stränge in einer Formpresse 11 eingelegt sind, und bei denen die Fasern 9 sowie Thermoplast-Fäden 8b in einer zur Querschnittsebene schrägen Ausrichtung geschichtet angeordnet sind. Es ist zudem auch eine Anordnung der Fasern 9 und der Fäden 8b möglich, die keine erkennbare Schichtung aufweist. In diesem Ausführungsbeispiel befinden sich an der Oberseite und an der Unterseite eines jeden Faser-Thermoplast-Stranges 10a, 10b, 10cThermoplast-Folien 8a, die den erwünschten geringen Überschuss an Thermoplast-Material gewährleisten.

Bei allen Varianten der Faser-Thermoplast-Stränge 10a, 10b, 10c befindet sich jedoch bereits in dem noch nicht abgebundnen Zustand der Faser-Thermoplast-Stränge 10a, 10b, 10c soviel Thermoplast 8a, 8b, dass dieses Thermoplast nach dessen Erwärmen über seine Schmelztemperatur in der Formpresse 11 alle Zwischenräume 16 zwischen den Fasern 9 ausfüllen sowie die Außenseiten der Roh-Blattfeder 15 komplett abdecken kann.

Wie Fig. 3 weiter verdeutlicht, wird zumindest ein abgeschnittenes Stück des Thermoplast-Stranges 10a, 10b, 10c verfahrensgemäß in eine zumindest zweiteilige Formpresse 11 eingelegt und anschließend bei einer Temperatur T1, die über der Schmelztemperatur des Thermoplasts liegt, sowie unter einem von einer auf den Formstempel wirkenden Kraft F erzeugten Pressdruck zu einer Roh-Blattfeder 15 geformt. Die Formpresse 11 ist in einem Raum 12 angeordnet, der mit einem Schutzgas 14, wie beispielsweise Stickstoff, gefüllt ist. Dieses Schutzgas 14 verhindert nach dem Erhitzen des Thermoplasts 8a, 8b über deren Schmelztemperatur eine Oxidation desselben mit Luftsauerstoff, so dass sich sehr gute Bauteileigenschaften einer solchermaßen hergestellten Blattfeder erzielen lassen. Während der Herstellung der Roh-Blattfeder 15 in der Formpresse 11 fließt überschüssiges Thermoplast 8a, 8b in geringer Menge gezielt aus derselben ab. Entsprechend ausgebildete Dichtungen 13 an den Längsseiten der Formpresse 11 sorgen dafür, dass das nicht benötigte Thermoplast 8a, 8b an den axialen Enden der Roh-Blattfeder 15 abfließt. Dadurch wird eine optimale Verteilung des Thermoplasts 8 zwischen den Fasern 9 begünstigt.

Nach dem Entformen der Roh-Blattfeder 15 kühlt diese in einem weiteren, in Fig. 4 gezeigten Verfahrensschritt auf eine zweite Temperatur T2 ab, die unterhalb der ersten Temperatur T1 liegt. Diese Temperatur T2 kann die Umgebungstemperatur einer Fabrikhalle sein, also beispielsweise 20°C bis 30°C betragen. Gemäß einer anderen Verfahrensvariante ist diese Temperatur T2 diejenige Temperatur, ab der sicher keine Oxidation des Thermoplasts 8a, 8b mit dem Sauerstoff der Umgebungsluft mehr stattfindet. In diesem Fall befindet sich die Roh-Blattfeder 15 während ihrer Abkühlung noch in dem mit dem Schutzgas 14 gefüllten Raum 12, oder dieselbe wird während der Abkühlungsphase von einem solchen Schutzgas 14 umspült. Das Schutzgas 14 kann auch gekühlt sein, um den Abkühlungsprozess zu beschleunigen.

Fig. 5 zeigt eine schematische Querschnittsansicht durch eine nach dem beschriebenen Verfahren hergestellten Roh-Blattfeder 15, bei der alle Zwischenräume 16 zwischen den Glasfasern 9 mit dem Thermoplast 8 ausgefüllt sowie alle Fasern 9 an den Außenseiten der Roh-Blattfeder 15 mit demselben vollständig abgedeckt sind. Entgegen dem in Fig. 5 vereinfacht dargestellten Aufbau ist der Anteil des erstarrten Thermoplasts 8 in der Roh-Blattfeder 15 kleiner als der Anteil der Fasern 9. Eine solchermaßen hergestellte Roh-Blattfeder 15 wird anschließend in bekannten weiteren Verfahrensschritten, wie etwa einem Zuschneiden auf ein Endmaß, zu einer Faserverbund-Blattfeder fertig bearbeitet. Diese Faserverbund-Blattfeder ist kostengünstig in der Herstellung und weist sehr gute Betriebseigenschaften auf.

### Bezugszeichen

- 1: Faser-Speicher
- 2: Faser-Speicher
- 3: Faser-Speicher
- 4: Thermoplast-Speicher
- 5: Thermoplast-Speicher
- 6: Thermoplast-Speicher
- 7: Thermoplast-Speicher
- 8: Thermoplast
- 8a: Thermoplastfolie
- 8b: Thermoplastfaser,
- 9: Faser, Glasfaser
- 10a: Faser-Thermoplast-Strang
- 10b: Faser-Thermoplast-Strang
- 10c: Faser-Thermoplast-Strang
- 11: Formpresse
- 12: Raum
- 13: Dichtung
- 14: Schutzgas
- 15: Roh-Blattfeder
- 16: Zwischenraum zwischen den Fasern 9
- 17: Außenoberfläche der außenseitig angeordneten Fasern 9
- 18: Schneidevorrichtung
- F: Kraft
- T1: Erste Temperatur
- T2: Zweite Temperatur

## Patentansprüche

1. Verfahren zur Herstellung einer Blattfeder aus einem Faserverbundwerkstoff, wobei der Faserverbundwerkstoff aus einem Thermoplast (8) und unidirektional ausgerichteten Fasern (9) besteht, und bei dem das Thermoplast (8) in Form von Folien (8a) verwendet wird, mit den folgenden Verfahrensschritten:
a) Herstellen eines Faser-Thermoplast-Stranges (10a, 10b, 10c) durch wechselweises Anordnen von Fasern (9) und Thermoplastfolien (8a), wobei das in einer Längeneinheit des Faser-Thermoplast-Stranges (10a, 10b, 10c) befindliche Volumen des Thermoplasts (8) größer ist als das Volumen aller Zwischenräume (16) zwischen den Fasern (9), und bei dem das in einer Längeneinheit des Faser-Thermoplast-Stranges (10a, 10b, 10c) befindliche Volumen des Thermoplasts (8) zusätzlich ausreicht, um alle Außenoberflächen (17) der in der Roh-Blattfeder (15) außenseitig angeordneten Fasern (9) vollständig abzudecken,
b) Einbringen des Faser-Thermoplast-Stranges (10a, 10b, 10c) oder einer Mehrzahl von Faser-Thermoplast-Strängen (10a, 10b, 10c) vorbestimmter Länge in eine Formpresse (11),
c) Ausüben einer vorbestimmten Kraft (F) sowie einer vorbestimmten ersten Temperatur (T1) auf den zumindest einen Faser-Thermoplast-Strang (10a, 10b, 10c) in der Formpresse (11) derart, dass das Thermoplast (8) schmilzt und dieses alle Zwischenräume (16) zwischen den Fasern (9) ausfüllt sowie die Fasern (9) an der außenseitige Oberfläche der so hergestellten Roh-Blattfeder (15) vollständig abdeckt,
d) Ausformen der Roh-Blattfeder (15) aus der Formpresse (11) und Abkühlen derselben auf eine zweite Temperatur (T2), und
e) Endbearbeitung der Roh-Blattfeder (15).

2. Verfahren nach Anspruch 1, **dadurch gekennzeichnet, dass** die Fasern (8) und die Thermoplastfolien (8a) zur Bildung eines Faser-Thermoplast-Stranges (10a, 10b, 10c) kontinuierlich aus zugeordneten Speichern (1, 2, 3; 4, 5, 6, 7) entnommen, anschließend wechselweise nebeneinander und/oder übereinander abgelegt sowie schließlich in Stücke solcher Länge abgeschnitten werden, die der Länge einer herzustellenden Roh-Blattfeder (15) im Wesentlichen entspricht.

3. Verfahren nach einem der Ansprüche 1 oder 2, **dadurch gekennzeichnet, dass** als Thermoplast (8) ein Polypropylen oder Styrol-Acrylnitril-Copolymer verwendet wird.

4. Verfahren nach einem der Ansprüche 1 bis 3, **dadurch gekennzeichnet, dass** als Fasern (9) Glasfasern, Aramidfasern, Kohlenstofffasern oder metallische Fasern verwendet werden.

5. Verfahren nach einem der Ansprüche 1 bis 4, **dadurch gekennzeichnet, dass** das Herstellverfahren zur Bildung des Faser-Thermoplast-Stranges (10a, 10b, 10c) und/oder zur Bildung der Roh-Blattfeder (15) zumindest in der Formpresse (11) unter Einwirkung von einem Schutzgas (14) durchgeführt wird, wobei eine Oxidation des Thermoplasts (8) mit Sauerstoff zumindest weitestgehend vermieden wird.

6. Verfahren nach Anspruch 5, **dadurch gekennzeichnet, dass** als Schutzgas (14) Stickstoff, Argon, Helium oder ein Gemisch von zumindest zweien dieser Gase verwendet wird.

7. Blattfeder aus einem Faserverbundwerkstoff, der aus einem Thermoplast (8) und unidirektional ausgerichteten Fasern (9) besteht, hergestellt nach einem Verfahren gemäß zumindest einem der vorherigen Ansprüche,
**dadurch gekennzeichnet,**
**dass** deren Oberflächen und Zwischenschichten ein erstarrtes, nicht oxidiertes Thermoplast (8) aufweisen.

## Claims

1. A method for manufacturing a leafspring from a fibrous compound material, wherein the fibrous compound material consists of a thermoplast (8) and unidirectionally aligned fibers (9), and the thermoplast (8) is used in the form of films (8a), the method comprising the following steps:
a) manufacturing a fiber/thermoplast strand (10a, 10b, 10c) by alternatingly positioning fibers (9) and thermoplast films (8a), wherein the volume of thermoplast (8) contained in a unit of length of the fiber/thermoplast strand (10a, 10b, 10c) is greater than the volume of all the interstices (16) between the fibers (9), and wherein the volume of thermoplast (8) contained in a unit of length of the fiber/thermoplast strand (10a, 10b, 10c) is also sufficient to cover all the outer surfaces (17) of the fibers (9) located on the exterior of the raw leafspring (15),
b) introducing the fiber/thermoplast strand (10a, 10b, 10c) or a plurality of fiber/thermoplast strands (10a, 10b, 10c) of predetermined length into a molding press (11),
c) exerting a predetermined force (F) and a predetermined first temperature (T1) on the at least one fiber/thermoplast strand (10a, 10b, 10c) in the molding press (11) such that the thermoplast (8) melts, filling in all the interstices (16) between the fibers (9) and completely covering the fibers (9) on the outer surface of the raw leafspring (15) manufactured in this manner,
d) removing the raw leafspring (15) from the molding press (11) and cooling it to a second temperature (T2), and
e) finishing the raw leafspring (15).

2. The method according to claim 1, **characterized in that** the fibers (8) and the thermoplast films (8a) used to produce a fiber/thermoplast strand (10a, 10b, 10c) are drawn continuously from allocated storage units (1, 2, 3; 4, 5, 6, 7), and are then positioned alternatingly side by side and/or one on top of the other, and finally are cut into sections, the length of which corresponds substantially to the length of a raw leafspring (15) to be manufactured.

3. The method according to either of claims 1 and 2, **characterized in that** a polypropylene or styrene acrylonitrile copolymer is used as the thermoplast (8).

4. The method according to any of claims 1 to 3, **characterized in that** glass fibers, aramid fibers, carbon fibers or metallic fibers are used as the fibers (9).

5. The method according to any of claims 1 to 4, **characterized in that** the manufacturing method for producing the fiber/thermoplast strand (10a, 10b, 10c) and/or for producing the raw leafspring (15) is carried out at least in the molding press (11) under the influence of a protective gas (14), whereby oxidation of the thermoplast (8) with oxygen is at least substantially prevented.

6. The method according to claim 5, **characterized in that** nitrogen, argon, helium or a mixture of at least two of these gases is used as the protective gas (14).

7. A leafspring made of a fibrous compound material consisting of a thermoplast (8) and unidirectionally aligned fibers (9), manufactured by a method according to at least one of the preceding claims, **characterized in that** the surfaces and interstices thereof have a solidified, non-oxidized thermoplast (8).

## Revendications

1. Procédé de fabrication d'un ressort à lame à partir d'une matière composite fibreuse, où la matière composite fibreuse consiste en un thermoplastique (8) et en fibres (9) orientées dans une direction unique, et où le thermoplastique (8) est utilisé sous forme de films (8a), comprenant les étapes suivantes :
a) fabrication d'un brin fibres/thermoplastique (10a, 10b, 10c) par disposition alternée de fibres (9) et de films thermoplastiques (8a), le volume de thermoplastique (8) compris dans une unité de longueur du brin fibres/thermoplastique (10a, 10b, 10c) étant supérieur au volume de tous les interstices (16) entre les fibres (9), et où le volume de thermoplastique (8) compris dans une unité de longueur du brin fibres/thermoplastique (10a, 10b, 10c) est en outre suffisant pour recouvrir complètement toutes les surfaces extérieures (17) des fibres (9) disposées à l'extérieur du ressort à lame brut (15),
b) mise en place du brin fibres/thermoplastique (10a, 10b, 10c) ou d'une pluralité de brins fibres/thermoplastique (10a, 10b, 10c) de longueur prédéfinie dans une presse de moulage (11),
c) application d'une force (F) ainsi que d'une première température (T1) prédéfinie sur ledit au moins un brin fibres/thermoplastique (10a, 10b, 10c) dans la presse de moulage (11), de manière à faire fondre le thermoplastique (8), celui-ci comblant tous les interstices (16) entre les fibres (9) et recouvrant complètement les fibres (9) à la surface extérieure du ressort à lame brut (15) ainsi produit,
d) démoulage du ressort à lame brut (15) hors de la presse de moulage (11) et refroidissement de celui-ci à une deuxième température (T2), et
e) façonnage final du ressort à lame brut (15).

2. Procédé selon la revendication 1, **caractérisé en ce que** les fibres (8) et les films thermoplastiques (8a) sont prélevées de manière continue de magasins (1, 2, 3 ; 4, 5, 6, 7) correspondants pour la formation d'un brin fibres/thermoplastique (10a, 10b, 10c), puis juxtaposées et/ou superposées de manière alternée et finalement coupées en morceaux de longueur correspondant sensiblement à la longueur d'un ressort à lame brut (15) à fabriquer.

3. Procédé selon la revendication 1 ou 2, **caractérisé en ce qu'**un polypropylène ou un copolymère styrène-acrylonitrile est utilisé comme thermoplastique (8).

4. Procédé selon l'une des revendications 1 à 3, **caractérisé en ce que** les fibres (9) utilisées sont des fibres de verre, d'aramide, de carbone ou des fibres métalliques.

5. Procédé selon l'une des revendications 1 à 4, le procédé de fabrication pour la formation du brin fibres/thermoplastique (10a, 10b, 10c) et/ou pour la formation du ressort à lame brut (15) étant **caractérisé en ce qu'**il est exécuté en présence d'un gaz de protection (14) au moins dans la presse de moulage (11), une oxydation du thermoplastique (8) par de l'oxygène étant au moins sensiblement empêchée.

6. Procédé selon la revendication 5, **caractérisé en ce que** le gaz de protection (14) utilisé est l'azote, l'argon, l'hélium ou un mélange d'au moins deux de ces gaz.

7. Ressort à lame en matière composite fibreuse, consistant en un thermoplastique (8) et en fibres (9) orientées dans une direction unique, fabriqué avec un procédé selon au moins une des revendications précédentes, **caractérisé en ce que** ses surfaces et couches intercalaires comprennent un thermoplastique (8) solidifié non oxydé.
